# EUROPÄISCHE PATENTSCHRIFT

(11) **EP 0 415 001 B1**
(45) Veröffentlichungstag und Bekanntmachung des Hinweises auf die Patenterteilung: **01.09.1993**
(21) Anmeldenummer: 90108878.1
(22) Anmeldetag: 11.05.1990
(51) Int. Cl.: F16F 13/00

(54) **Hydrolager**
Hydraulic support
Support hydraulique

(30) Priorität: 31.08.1989 DE 3928862
(43) Veröffentlichungstag der Anmeldung: 06.03.1991
(73) Patentinhaber: Firma Carl Freudenberg, 69469 Weinheim (DE)
(72) Erfinder: Hamaekers, Arno, D-6946 Gorxheimertal (DE); Rudolph, Axel, D-6100 Darmstadt (DE)

(56) Entgegenhaltungen:
- EP-A- 0 304 349
- DE-B- 2 833 776
- FR-A- 2 384 999

## Beschreibung

Die Erfindung betrifft bin Hydrolager nach dem Oberbegriff von Anspruch 1.

Ein solches Hydrolager ist aus der DE-AS 2833776 bekannt. Die Dämpfungsöffnung ist dabei von variablem Querschnitt und das Druckbegrenzungsventil mit einem Stellglied versehen, das im unbetätigten Zustand an der Gegenfläche anliegt. Sowohl hinsichtlich der Dämpfung tieffrequenter Schwingungen als auch hinsichtlich der Isolierung hochfrequenter Schwingungen sind die Eigenschaften wenig befriedigend.

Der Erfindung liegt die Aufgabe zugrunde, ein solches Hydrolager derart weiterzuentwickeln, daß sich ein präzise definiertes Dämpfungsverhalten von großer Güte im tieffrequenten Schwingungsbereich ergibt und eine Reduzierung der dynamischen Härte im hochfrequenten Bereich.

Diese Aufgabe wird erfindungsgemäß bei einem Hydrolager der eingangs genannten Art mit den kennzeichnenden Merkmalen von Anspruch 1 gelöst. Auf vorteilhafte Ausgestaltungen nehmen die Unteransprüche Bezug.

Bei dem erfindungsgemäßen Hydrolager ist die Dämpfungsöffnung von unveränderbarem Querschnitt, was die Erzielung einer optimalen Dämpfungswirksamkeit in einem bestimmten Frequenzbereich gewährleistet. Dieser läßt sich durch Variation des Querschnittes nach Bedarf verlagern zu einem anderen Frequenzbereich und damit auch zu Schwingungen, die in besonders hohem Maße der Dämpfung bedürfen, beispielsweise Schwingungen, die resonanzüberhöhte Schwingungsausschläge des gelagerten Körpers verursachen können.

Das Stellglied weist im unbetätigten Zustand einen Abstand von dem Gegenanschlag auf, wobei das Stellglied und der Abstand hinsichtlich ihrer räumlichen Ausdehnung so groß bemessen sind, daß eine gegenseitige Berührung zwischen dem Stellglied und dem Gegenanschlag bei Einleitung akustisch wirksamer Schwingungen mit kleinen Amplituden und einer Frequenz von mehr als 30 Hz ausgeschlossen ist. Das Druckbegrenzungsventil ist hierdurch bei Einleitung akustisch wirksamer Schwingungen stets in einem solchen Maße geöffnet, daß ein Druckaufbau in dem Arbeits- oder dem Ausgleichsraum vermieden wird. Der das Traglager auf dem Auflager abstützende Federkörper wird hierdurch nicht zusätzlich belastet, was die dynamische Federrate vermindert und die Erzielung einer guten Isolierung akustisch wirksamer Schwingungen begünstigt.

Das Stellglied kann ein zungenartig vorstehendes Ende aufweisen und mit dem Ende an den Gegenanschlag anlegbar sein. Es besteht zweckmäßig aus elastomerem Werkstoff und läßt sich bei einer solchen Ausführung besonders kostengünstig erzeugen.

Der Gegenanschlag des Stellgliedes kann zwei Teilanschläge umfassen, die sich im wesentlichen parallel zueinander erstrecken und in Strömungsrichtung einen Abstand voneinander haben, wobei das Stellglied in dem durch den Abstand gebildeten Zwischenraum der Teilanschläge angeordnet ist. Es läßt sich bei dieser Ausführung in beiden Strömungsrichtungen im erfindungsgemäßen Sinne betätigen.

Um in beiden Strömungsrichtungen eine übereinstimmende Dämpfungs- und Isolierwirksamkeit zu erzielen, hat es sich als vorteilhaft bewährt, wenn die Teilanschläge und/oder das Stellglied spiegelbildlich gestaltet und einander im schwingungsfreien Zustand spiegelbildlich zugeordndet sind.

Eine sich in beide Richtungen ergebende Wirksamkeit des Druckbegrenzungsventils im Sinne der vorliegenden Erfindung läßt sich auch dann erzielen, wenn das Stellglied zwei Teilglieder umfaßt, wenn die Teilglieder in Strömungsrichtung einen Abstand voneinander haben und wenn der Gegenanschlag in dem durch den Abstand gebildeten Zwischenraum angeordnet ist und zwei den Teilgliedern zugewandte Anschlagflächen aufweist. Auch dabei ist es möglich, eine ausgeglichene Wirksamkeit in beiden Strömungsrichtungen zu erzielen, wenn die Teilglieder und/oder der Gegenanschlag spiegelbildlich gestaltet und einander im schwingungsfreien Zustand spiegelbildlich zugeordnet sind.

Zur Funktion des erfindungsgemäßen Hydrolagers läßt sich folgendes ausführen:

Tieffrequente Schwingungen haben bei dem erfindungsgemäßen Hydrolager abwechselnd eine Drucksteigerung in dem Arbeits- und dem Ausgleichsraum zur Folge. Unter der Wirkung des jeweils höheren Druckes ergibt sich im Bereich des elastisch ausgebildeten Stellgliedes des Druckbegrenzungsventils eine Ausweichbewegung, wodurch es zügig und flüssigkeitsdicht an den jeweils zugehörigen Gegenanschlag angepreßt wird. Die Überströmöffnung steht dadurch für eine Verlagerung von Flüssigkeitsbestandteilen aus dem Arbeits- in den Ausgleichsraum bzw. in umgekehrter Richtung nicht mehr zur Verfügung. Das aus dem Raum höheren Druckes verdrängte Flüssigkeitsvolumen wird dadurch vollständig durch die Dämpfungsöffnung in den Raum niedrigeren Druckes verlagert, was mit einer erheblichen Energievernichtung verbunden ist und zur Schwingungsdämpfung ausgenutzt wird. Der Frequenzbereich, in welchem eine gute Schwingungsdämpfung gelingt, ist bei der erfindungsgemäßen Ausführung durch das Vorhandensein eines Gegenanschlages für das Stellglied des Druckbegrenzungsventiles sowie durch einen Durchtrittsquerschnitt definierter Größe der Dämpfungsöffnung in einer besonders präzisen Weise festlegbar. Die Anpassung an Schwingungen, die besonders störend in Erscheinung treten, ist daher problemlos möglich.

Bei Einleitung hochfrequenter Schwingungen in das erfindungsgemäße Hydrolager verharrt das Stellglied des Druckbegrenzungsventils demgegenüber in einer Ruhelage oder seine Relativbewegungen sind so gering, daß der Gegenanschlag nicht erreicht wird. Die Überströmöffnung steht dadurch für den Abbau von Drucksteigerungen in dem Arbeits- bzw. Ausgleichsraum stets in ausreichendem Maße zur Verfügung, wodurch sich bei Einleitung hochfrequenter Schwingungen in dem Arbeits- und dem Ausgleichsraum nachteilige Drucksteigerungen nicht zu ergeben vermögen. Das erfindungsgemäße Hydrolager hat dadurch eine wesentlich günstigere dynamische Federrate als die bekannten Ausführungen.

Das Stellglied des erfindungsgemäßen Hydrolagers ist beim Auftreten von Überdrücken an dem Gegenanschlag vorbeibewegbar, wodurch die Überströmöffnung in voller Breite für eine Druckentlastung zur Verfügung steht. Der Abbau des Überdruckes vollzieht sich dementsprechend schnell, was die Erzielung einer guten Isolierung der den Überdruck verursachenden Relativbewegungen begünstigt. Es kann sich hierbei beispielsweise um die Schüttelbewegungen eines Kolbenmotors handeln, die sich beim Anlassen oder Abstellen ergeben oder beim Überfahren einer Bordsteinkante, wenn ein solcher Motor in einem Kraftfahrzeug zur Anwendung gelangt.

Der Gegenstand der Erfindung wird nachfolgend anhand der Zeichnungen weiter verdeutlicht. Es zeigen:
- Fig. 1: Ein Hydrolager der erfindungsgemäßen Art in persperktivischer Ansicht von oben;
- Fig. 2: das Hydrolager gemäß Fig. 1 in quergeschnittener Darstellung;
- Fig. 3: das Hydrolager nach Fig. 1 in längsgeschnittener Darstellung, wobei zwei voneinander abweichende Schnittebenen gewählt worden sind;
- Fig. 4: einen vergrößerten Ausschnitt aus dem Hydrolager nach Fig. 2, welcher sich auf den Bereich des Klappenventils beschränkt;
- Fig. 5: das Klappenventil nach Fig. 4 im Anschluß an die Überschreitung der Anschlagfläche;
- Fig. 6: eine besondere Ausführung einer Ventilklappe.

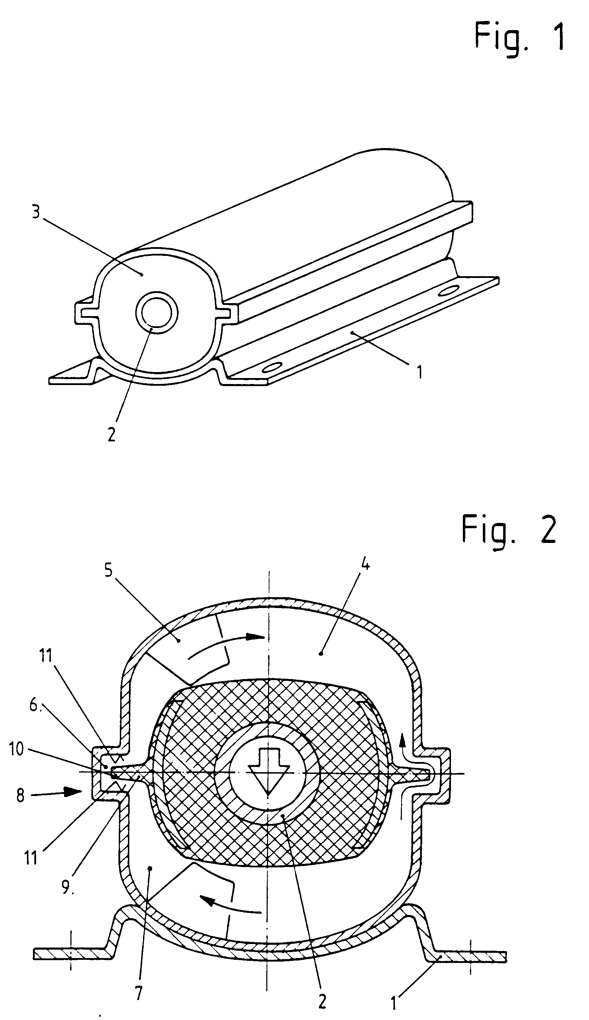

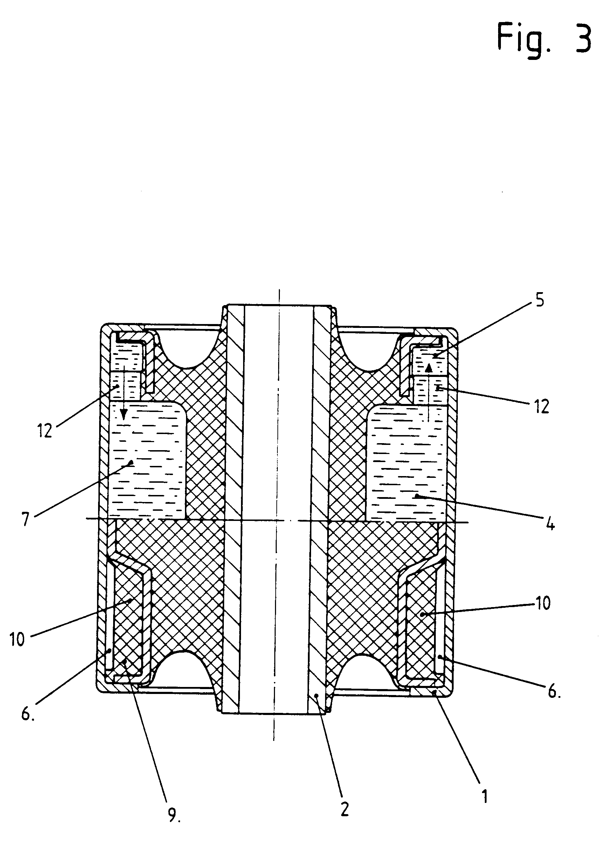

Das in Fig. 1 gezeigte Hydrolager hat die Gestalt einer Hülsengummifeder. Es ist zur Abstützung eines Verbrennungsmotors in einem Kraftfahrzeug bestimmt.

Das gezeigte Hydrolager besteht im wesentlichen aus dem metallischen Traglager 1 und dem metallischen Auflager 2, die durch einen nachgiebigen Körper aus Gummi aufeinander abgestützt sind. Es ist daher in der gezeigten Form unmittelbar verwendungsfähig.

Der bei dem Hydrolager nach Fig. 1 das Auflager 2 auf dem Traglager 1 abstützende Körper aus Gummi enthält im Inneren zwei nicht sichtbare, flüssigkeitsgefüllte Hohlräume, die stirnseitig durch nachgiebige Wandungen 3 aus Gummi abgeschlossen sind. Die beiden Hohlräume sind in Richtung der eingeleiteten Schwingungen hintereinanderliegend angeordnet und bilden den Arbeitsraum 4 und den Ausgleichsraum 7. Sie sind flüssigkeitsgefüllt und durch die Dämpfungsöffnung 5 verbunden. Diese ist so dimensioniert, daß sich im Bereich tieffrequenter Schwingungen bis max. 30 Hz eine hochgradige Dämpfungswirkung ergibt. Diese beruht auf an sich bekannten Effekten.

Parallel zu der Dämpfungsöffnung 5 sind bei der gezeigten Ausführung zwei Überströmöffnungen 6 zwischen dem Arbeitsraum 4 und dem Ausgleichsraum 7 vorgesehen. Diese enthalten jeweils ein Druckbegrenzungsventil 8, bestehend aus einem Stellglied in Form einer an ihrem Grund starr festgelegten, elastisch nachgiebigen Ventilklappe, deren in radialer Richtung vorstehendes Ende in der gezeigten Ruhestellung einen Abstand von den sowohl in Richtung des Arbeits- als auch in Richtung des Ausgleichsraumes 4, 7 vorgelagerten Gegenanschlägen aufweist. Die Ventilklappe ist dadurch bei Einleitung hochfrequenter Schwingungen in dem gezeigten Hydrolager umströmbar, wodurch derartige Schwingungen nicht zu störenden Druckveränderungen in dem Arbeitsraum 4 sowie in dem Ausgleichsraum 7 führen können. Sie werden dementsprechend in einer ausgezeichneten Weise isoliert.

Bei Einleitung tieffrequenter Schwingungen, welche von entsprechend großer Amplitude sind, resultiert demgegenüber unter Wirkung der sich ergebenden, höheren Drücke eine so weitgehende Lageveränderung des Endes der Ventilklappe, daß sich eine abwechselnde Berührung der beiden Gegenanschläge 11 ergibt. Die Überströmöffnung 6 wird dadurch jeweils blockiert, so daß anschließend nur noch Flüssigkeitsbestandteile durch die Dämpfungsöffnung 5 aus dem jeweiligen Raum höheren Druckes in den Raum niedrigeren Druckes verlagert werden können. Eine präzise einsetzende und hochgradige Dämpfungswirkung ist hiervon die Folge.

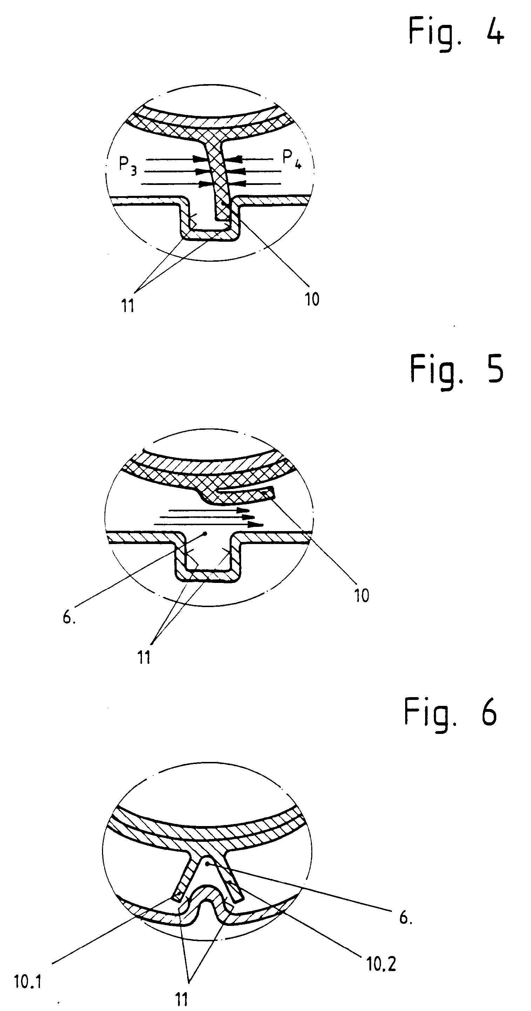

Fig. 3 zeigt das Hydrolager nach den Fig. 1 und 2 in längsgeschnittener Darstellung, wobei zwei voneinander abweichende Schnittebenen gewählt worden sind. Im linken Teil der Darstellung wurde der Bereich des Hydrolagers nach Fig. 2 gezeigt, in welchem das Klappenventil angeordnet ist. Es ist zu ersehen, daß die elastisch nachgiebigen Ventilklappen sowohl in radialer Richtung innenseitig als auch in axialer Richtung beiderseits in starrer Weise festgelegt sind, nämlich durch unmittelbares Anvulkanisieren an eine metallische Trägerhülse. Das in radialer Richtung nach außen vorstehende, zungenartig ausgebildete Ende ist demgegenüber durch die Differenzdrücke, die sich betriebsbedingt bei Einleitung von Schwingungen alternierend zwischen dem Arbeits- und dem Ausgleichsraum ergeben, frei beweglich. Es weist einen radialen Abstand vom Innenumfang des ringförmig ausgebildeten Traglagers 1 auf. Der Abstand bildet zugleich die Überströmöffnung 6, durch welche bei Einleitung hochfrequenter Schwingungen Flüssigkeitsbestandteile zwischen dem Arbeits- und dem Ausgleichsraum 4, 7 hin- und herbewegt werden können.

Im rechten Teil der Darstellung nach Fig. 3 ist Bezug genommen auf die Ausbildung der Dämpfungsöffnung 5. Diese ist kanalartig gestaltet und um den Außenumfang des hülsenähnlich ausgebildeten Traglagers 1 teilweise herumgeführt. Die Ein- und Ausströmöffnungen werden durch Anschlußkanäle 12 gebildet, welche sich in axialer Richtung erstrecken. Der Arbeitsraum 4 und der Ausgleichsraum, die Anschlußkanäle 12 und die Dämpfungsöffnung 5 sind vollständig mit einer inkompressiblen, hydraulischen Flüssigkeit gefüllt, vorzugsweise mit einem Gemisch aus Glykol und Wasser.

In Fig. 4 ist das Druckbegrenzungsventil des Hydrolagers nach Fig. 2 in einer speziellen Betriebssituation wiedergegeben. Diese nimmt Bezug auf die Einleitung tieffrequenter Schwingungen, welche eine Ausweichbewegung des Endes des zungenartig ausgebildeten Stellgliedes jeweils in Richtung des Raumes niedrigeren Druckes zur Folge haben, im vorliegenden Falle in Richtung des Raumes, in welchem der Druck P4 herrscht. Es ergibt sich in diesem Falle eine gegenseitige Berührung zwischen dem Ende des zungenartig ausgebildeten Stellgliedes und dem Gegenanschlag 11, wodurch die zunächst vorhandene Überströmöffnung 6 geschlossen wird. Anschließend kann der sich in dem Raum höheren Druckes ergebende Druckanstieg nur noch über die in Fig. 4 nicht gezeigte Dämpfungsöffnung 5 ausgeglichen werden. Dieser Ausgleich ist indessen mit einer großen Dämpfungswirkung verbunden, welche beispielsweise in bezug auf die Dämpfung von fahrbahnerregten Motorschwingungen erwünscht ist.

Fig. 5 nimmt Bezug auf eine Betriebssituation, bei der in einem der Räume 4, 7 ein Überdruck vorhanden ist, im gezeigten Ausführungsbeispiel auf der linken Seite der Darstellung. Der Überdruck hat in diesem Falle eine Ausweichbewegung des Endes des zungenartig ausgebildeten Stellgliedes 10 über den Gegenanschlag 11 hinweg zur Folge, wodurch die Überströmöffnung 6 zur Gänze freigegeben wird. Der Überdruck in dem einen Raum kann dadurch spontan ausgeglichen werden, ohne daß sich eine Dämpfungswirkung ergibt. Eine entsprechende Wirksamkeit ist besonders erwünscht in bezug auf die Vermeidung von Geräuschen, die durch das Anlaßschütteln von Kolbenmotoren erregt werden können oder sich beim Überfahren von Bordsteinkanten und ähnlich groben Unebenheiten ergeben können.

Das in Fig. 6 gezeigte Druckbegrenzungsventil hat in grundsätzlicher Hinsicht dieselbe Wirksamkeit wie vorstehend beschrieben. Es ist indessen von anderem Aufbau und insbesondere dadurch gekennzeichnet, daß das Ende des zungenartig ausgebildeten Stellgliedes 10 quer zur Strömungsrichtung aufgespalten ist und zwei mit ihren Enden geneigt vorstehende Teilglieder 10.1; 10.2 umfaßt, wobei im Zwischenraum der beiden Teilglieder der Gegenanschlag 11 angeordnet ist und zwei den Teilgliedern zugewandte Anschlagflächen aufweist. Diese haben in der gezeigten Ruhestellung ebenfalls einen Abstand von den Teilgliedern. Dieser bleibt bei Einleitung hochfrequenter Schwingungen in mehr oder weniger großem Maß erhalten, während die Einleitung tieffrequenter Schwingungen eine abwechselnde Berührung eines der Teilglieder 10.1; 10.2 mit einem der Gegenanschläge 11 zur Folge hat und hieraus resultierend eine Blockierung der Überströmöffnung 6. Es ergibt sich eine hochgradige Dämpfungswirkung unter Ausnutzung an sich bekannter Effekte.

Plötzlich auftretende Überdrücke haben hingegen ein vollkommenes Durchschnappen des dem Raum höheren Druckes zugewandten Teilglied 10.1 bzw. 10.2 über den zuvor berührten Gegenanschlag 11 hinaus zur Folge, was zu einer spontanen Druckentlastung führt und eine gute Isolierung entsprechender Druckstöße gestattet.

## Patentansprüche

1. Hydrolager, umfassend ein Traglager und ein Auflager, die durch einen Federkörper aus gummielastischem Werkstoff aufeinander abgestützt sind und einen flüssigkeitsgefüllten Arbeitsraum begrenzen, wobei der Arbeitsraum durch wenigstens eine Überströmöffnung und durch wenigstens eine Dämpfungsöffnung mit einem Ausgleichsraum verbunden ist, wobei die Überströmöffnung mit einem Druckbegrenzungsventil versehen ist, das durch den Differenzdruck zwischen dem Arbeits- und dem Ausgleichsraum betätigbar ist und das ein Stellglied sowie einen Gegenanschlag enthält, an dem das Stellglied dichtend anlegbar und bei Überdrücken vorbeibewegbar ist, dadurch gekennzeichnet, daß das Stellglied (10) im unbetätigten Zustand einen Abstand von dem Gegenanschlag (11) aufweist und daß das Stellglied (10) und der Abstand hinsichtlich ihrer Ausdehnung so bemessen und miteinander abgestimmt sind, daß eine gegenseitige Berührung zwischen dem Stellglied (10) und dem Gegenanschlag (11) bei Einleitung akustisch wirksamer Schwingungen mit kleinen Amplituden und einer Frequenz von mehr als 30 Hz ausgeschlossen ist.

2. Hydrolager nach Anspruch 1, dadurch gekennzeichnet, daß das Stellglied (10) ein zungenartig vorstehendes Ende aufweist und mit dem Ende an den Gegenanschlag anlegbar ist.

3. Hydrolager nach Anspruch 1 bis 2, dadurch gekennzeichnet, daß der Gegenanschlag (10) zwei Teilanschläge umfaßt, die sich im wesentlichen parallel zueinander erstrecken und in Strömungsrichtung einen Abstand voneinander haben, und daß das Stellglied (10) in dem durch den Abstand gebildeten Zwischenraum der Teilanschläge angeordnet ist.

4. Hydrolager nach Anspruch 3, dadurch gekennzeichnet, daß die Teilanschläge und/oder das Stellglied (10) spiegelbildlich gestaltet und einander im schwingungsfreien Zustand spiegelbildlich zugeordnet sind.

5. Hydrolager nach Anspruch 1 bis 2, dadurch gekennzeichnet, daß das Stellglied (10) zwei Teilglieder (10.1; 10.2) umfaßt, daß die Teilglieder (10.1; 10.2) in Strömungsrichtung einen Abstand voneinander haben und daß der Gegenanschlag (11) in dem durch den Abstand gebildeten Zwischenraum angeordnet ist und zwei den Teilgliedern zugewandte Anschlagflächen aufweist.

6. Hydrolager nach Anspruch 5, dadurch gekennzeichnet, daß die Teilglieder und/oder der Gegenanschlag spiegelbildlich gestaltet und einander im schwingungsfreien Zustand spiegelbildlich zugeordnet sind.

## Claims

1. A hydraulic mount comprising a supporting bearing and a support, which are supported on one another by a spring body composed of rubber-elastic material and delimit a fluid-filled working space, the working space being connected by at least one transfer opening and by at least one damping opening to a compensating space, the transfer opening being provided with a pressure relief valve which is actuable by the differential pressure between the working space and the compensating space and contains a regulating element and a counter stop against which the regulating element can be brought to rest in a sealing manner and past which the regulating element can be moved in the event of excess pressures, characterised in that, in the unactuated condition, the regulating element (10) exhibits a clearance in relation to the counter stop (11) and in that the regulating element (10) and the clearance are dimensioned and matched to one another in such a way as regards their extent that mutual contact between the regulating element (10) and the counter stop (11) when acoustically acting vibrations having small amplitudes and a frequency of more than 30 Hz are introduced is precluded.

2. A hydraulic mount according to claim 1, characterised in that the regulating element (10) has an end which projects like a tongue and can be brought to rest by the end against the counter stop.

3. A hydraulic mount according to either of claims 1 and 2, characterised in that the counter stop (11) comprises two part-stops, which extend essentially parallel to one another and are spaced apart in the direction of flow, and in that the regulating element (10) is arranged in the interspace between the part-stops, formed by such spacing.

4. A hydraulic mount according to claim 3, characterised in that the part-stops and/or the regulating element (10) are of mirror-symmetrical configuration and are associated with one another in mirror symmetry in the vibration-free condition.

5. A hydraulic mount according to either of claims 1 and 2, characterised in that the regulating element (10) comprises two part-elements (10.1; 10.2), in that the part-elements (10.1; 10.2) are spaced apart in the direction of flow and in that the counter stop (11) is arranged in the interspace formed by such spacing and has two stop faces facing the part-elements.

6. A hydraulic mount according to claim 5, characterised in that the part-elements and/or the counter stop are of mirror-symmetrical configuration and are associated with one another in mirror symmetry in the vibration-free condition.

## Revendications

1. Support hydraulique, comportant un organe de support et un organe d'appui, qui sont appuyés l'un contre l'autre par un corps formant ressort et constitué d'un matériau ayant l'élasticité du caoutchouc et qui délimitent une chambre de travail remplie de liquide, cette chambre de travail étant reliée par au moins un orifice de décharge et par au moins un orifice d'amortissement avec une chambre d'équilibrage, l'orifice de décharge étant pourvu d'une soupape de limitation de pression qui peut être actionnée par la différence entre les pressions régnant dans la chambre. de travail et dans la chambre d'équilibrage et qui contient un organe de manoeuvre ainsi qu'une contre-butée, contre laquelle l'organe de manoeuvre peut s'appliquer de façon étanche et peut passer devant elle sous l'effet de surpressions, caractérisé en ce que l'organe de manoeuvre (10), dans l'état non actionné, est espacé de la contre-butée (11) et en ce que l'organe de manoeuvre (10) et l'espacement sont dimensionnés, en ce qui concerne leur étendue, et réglés l'un par rapport à l'autre de telle sorte qu'un contact mutuel entre l'organe de manoeuvre (10) et la contre-butée (10) soit exclu lors d'une application de vibrations à effet acoustique, ayant de petites amplitudes et une fréquence supérieure à 30 Hz.

2. Support hydraulique selon la revendication 1, caractérisé en ce que l'organe de manoeuvre (10) comporte une extrémité faisant saillie en forme de languette et peut s'appliquer par cette extrémité contre la contre-butée.

3. Support hydraulique selon une des revendications 1 et 2, caractérisé en ce que la contre-butée (10) comporte deux butées partielles, qui sont orientées sensiblement parallèlement entre elles et qui sont espacées l'une de l'autre dans la direction d'écoulement et en ce que l'organe de manoeuvre (10) est disposé dans l'intervalle créé par l'espacement entre les butées partielles.

4. Support hydraulique selon la revendication 3, caractérisé en ce que les butées partielles et/ou l'organe de manoeuvre (10) sont profilées symétriquement et sont associées mutuellement symétriquement dans un état exempt de vibrations.

5. Support hydraulique selon une des revendications 1 et 2, caractérisé en ce que l'organe de manoeuvre (10) comporte deux organes partiels (10.1 ; 10.2), en ce que ces organes partiels (10.1 ; 10.2) sont espacés l'un de l'autre dans la direction d'écoulement et en ce que la contre-butée (11) est disposée dans l'intervalle créé par cet espacement et comporte deux surfaces de butée dirigées vers les organes partiels.

6. Support hydraulique selon la revendication 5, caractérisé en ce que les organes partiels et/ou la contre-butée sont profilés symétriquement et sont associés mutuellement symétriquement dans un état exempt de vibrations.
